# EUROPEAN PATENT APPLICATION

(11) **EP 4 763 715 A1**
(43) Date of publication of application: **24.06.2026**
(21) Application number: 25213567.8
(22) Date of filing: 05.11.2025
(51) Int. Cl.: B65B 1/30, G01F 11/00, G01F 23/00, G01F 23/26, B65B 29/00

(54) **METHOD AND MACHINE FOR THE PRODUCTION OF POUCHES CONTAINING A QUANTITY OF LOOSE MATERIAL, IN PARTICULAR SNUS**

(30) Priority: 19.12.2024 IT 202400029163
(71) Applicant: Sasib S.p.A., 40013 Castel Maggiore (BO) (IT)
(72) Inventor: GHIOTTI, Roberto, 40013 Castel Maggiore (BO) (IT); BALETTI, Sandro, 40013 Castel Maggiore (BO) (IT)
(74) Representative: Studio Torta S.p.A.

(57) **Abstract**

A method and a machine (6) for the production of pouches (1) containing a quantity (2) of a loose material, in particular snus, are described, comprising: a forming station (13) for enclosing the quantities (2) within a wrapping material band (11); a supplying unit (12) which is located upstream of the forming station (13) so as to supply the quantities (2) in the area of the wrapping material band (11) and comprising a supplying member (22) so as to receive the loose material in the area of a loading station (LS); and a control unit (UC) so as to supervise the operation of the machine (6).

The supplying unit (12) is provided with a hopper (26) having a tubular development and with an output mouth (27) for the loose material which is obtained close to the supplying member (22) so as to supply the loose material to the loading station (LS). The hopper (26) is configured to house, on the inside, a column of loose material and comprises a level sensor (34) to detect the height of the column of loose material and which is connected to the control unit (UC) to which it transmits a signal indicative of the height of the column of loose material inside the hopper (26). The control unit (UC) is configured to control the supply of loose material to the hopper (26) based on the signal transmitted by the level sensor (34).

## Description

### CROSS-REFERENCE TO RELATED APPLICATIONS

This patent application claims priority from Italian patent application no. 102024000029163 filed on December 19, 2024, the entire disclosure of which is incorporated herein by reference.

### FIELD OF THE ART

The present invention relates to a machine for the production of pouches (sachets) containing a quantity of a loose product (i.e. a non-compact product), in particular snus, and to a method for the production of pouches containing a quantity of a loose product, in particular snus. The present invention finds advantageous application to the production of snus pouches (i.e. permeable pouches intended for oral use that each contain a predetermined quantity of a loose product, i.e. a non-compact, more or less humid product, for example nicotine-based), to which the following discussion will make explicit reference without thereby losing generality.

### PRIOR ART

As is known, a pouch of snus has a substantially rectangular shape, is obtained from a wrapping sheet that is folded on itself to assume a closed shape around a quantity of loose material and is stabilized by a longitudinal seal and by means of a pair of transverse seals opposite to one another.

Typically, a packaging machine for the production of snus pouches comprises a conveyor device for conveying a wrapping material band along a manufacturing path, a wrapping station arranged along the manufacturing path, wherein the wrapping material band is rolled up so as to form a tubular wrap having a longitudinal development around a wrapping duct and a supplying device for the loose material that ends at the input of the wrapping duct and is configured to supply in succession the quantities of loose product within the tubular wrap (around which the wrapping material is folded so as to form the tubular wrap) by means of compressed air.

The packaging machine then comprises: a longitudinal sealing unit for longitudinally sealing the tubular wrap in the area of an overlapping area of the wrapping material band; a transverse sealing unit for transversely sealing the tubular wrap so as to form an alternating succession of sealing areas and areas containing a loose quantity of product; and a cutting unit for transversely cutting the tubular wrap in the area of the transverse sealing areas so as to separate the individual snus pouches.

Typically, the supplying member for the loose material device comprises a supplying drum which preferably rotates with a law of intermittent motion (i.e. having a cyclical alternation of motion phases and stop phases) around a horizontal rotation axis and is coupled to an intake source in the area of a loading station where it receives the loose material and to a compressed air source in the area of a supplying station where it directs the individual quantities inside the supplying duct.

The supplying device then comprises a hopper which is arranged above the supplying drum and conveys by gravity the loose material towards the loading station where the loose material is picked up by the supplying drum. The hopper is open at the top and is in communication with an input channel for the loose material. Ultimately, the supplying device has an open structure in which the loose material enters in the hopper through an input opening and rain falls by gravity creating an accumulation, even quite substantial, in the area of the loading station.

Although functioning in a satisfactory manner, in the supplying devices of known type the rain fall of the loose material inside the hopper does not occur in a controlled manner and unwanted escapes of the loose material from the supplying device may occur. In particular, this problem is all the more felt the more the loose material that is supplied is dry (i.e. with a low water content). In fact, the more the loose material is dry and the more it will be in a powdery form; it is evident that the fall of powdery material from above can generate clouds of loose material that can escape from the hopper and generate areas of dirt in the machine.

Documents US11891204 and CN116620605 describe machines for the production of pouches of known type.

### DISCLOSURE OF THE INVENTION

Aim of the present invention is therefore to provide a machine for the production of pouches containing a quantity of a loose product, in particular snus, which is free from the drawbacks of the state of the art and which is, at the same time, easy and economical to manufacture.

In accordance with the present invention there is provided a machine for the production of pouches containing a quantity of a loose product, in particular snus, comprising: a forming station located along a manufacturing path and configured to enclose the quantities within a wrapping material band; a supplying unit which is located upstream of the forming station along the manufacturing path, configured to supply the quantities in the area of the wrapping material band and comprising a supplying member (in particular a supplying drum) which is configured to receive the loose material in the area of a loading station; and a control unit configured to supervise the operation of the machine.

The supplying unit comprises a hopper having a tubular development and provided with an output mouth for the loose material which is located close to the supplying member so as to supply the loose material to the loading station. The hopper is configured to house, on the inside, a column of loose material and comprises a level sensor, preferably of the capacitive type, which is configured to detect the height of the column of loose material and which is connected to the control unit to which it transmits a signal indicative of the height of the column of loose material inside the hopper. The control unit is configured to control the supply of loose material to the hopper based on the signal transmitted by the level sensor.

According to a preferred embodiment, the level sensor is configured to check that the height of the column of loose material inside the hopper is above a threshold level and the control unit is configured to cause the supply of loose material to the hopper in case the height of the column of loose material inside the hopper is below the threshold level.

According to a preferred embodiment, the threshold level is at a height that allows to have loose material entering the hopper (in particular by means of the loose material supplying circuit) before the column of loose material is emptied. Advantageously, such positioning of the threshold level ensures a controlled and non-cascading descent of the loose material through the output mouth.

According to a preferred embodiment, the threshold level is equal to at least 2/3 of the length of the hopper considered starting from the output mouth (preferably, 3/4 of the length of the hopper).

According to a preferred embodiment, the hopper comprises an upper portion provided with an input opening in communication with a loose material supplying circuit and a lower portion defined by a side wall having a tapered shape towards the output mouth.

According to a preferred embodiment, the supplying unit comprises a frame inside which a collection chamber for the loose material is defined. In particular, at least the supplying member and the lower portion are housed inside the collection chamber.

According to a preferred embodiment, the machine comprises a mixing element (lump breaker), in particular of the rotary type, located close to the loading station.

According to a preferred embodiment, the mixing element is arranged inside the collection chamber below the output mouth of the hopper and in the area of the loading station.

According to a preferred embodiment, the hopper comprises a device for adjusting the flow of loose material coming out of the hopper through the output mouth.

According to a preferred embodiment, the adjustment device is located in the area of the output mouth so as to adjust the amount of loose material coming out and is configured to be placed in a first extreme position in which the output mouth has a minimum passage section for the loose material or in a second extreme position in which the output mouth has a maximum passage section for the loose material or in a number of intermediate positions between the first extreme position and the second extreme position which determine respective intermediate passage sections of the output mouth for the loose material.

According to a preferred embodiment, the size of the passage section is based on parameters which comprise the size of the pouches and/or the quantity of loose material contained therein and/or the speed of the supplying member and/or the humidity of the loose material.

For example, according to a preferred embodiment, the adjustment device comprises a partition provided with a slot and fixing means which engage the slot and are configured to connect the partition to a side wall of the hopper in a releasable manner and at different heights so as to vary the passage section for the loose material.

A further object of the present invention is therefore to provide a method for the production of pouches containing a quantity of a loose product, in particular snus, which is free from the drawbacks of the state of the art and which is, at the same time, easy and economical to implement.

According to the present invention, a method for the production of pouches containing a quantity of a loose material, in particular snus, is provided, comprising the steps of: housing a column of loose material inside a hopper; supplying the loose material through an output mouth of the hopper to a loading station of a supplying member; supplying the quantities of loose material to a wrapping material band; enclosing the quantities within the wrapping material band; detecting the height of the column of loose material inside the hopper, in particular by means of a level sensor; and controlling the supply of loose material to the hopper based on the height detected by the level sensor.

According to a preferred embodiment, the method provides for the further step of stopping the supplying member in case the height of the column of loose material inside the hopper falls below a minimum level.

According to a preferred embodiment, the method comprises the steps of: providing an adjustment device in the area of the output mouth of the hopper to adjust the amount of loose material coming out; placing the adjustment device in a first extreme position in which the output mouth has a minimum passage section for the loose material or in a second extreme position in which the output mouth has a maximum passage section for the loose material or in a number of intermediate positions between the first extreme position and the second extreme position which determine respective intermediate passage sections of the output mouth for the loose material.

According to a preferred embodiment, the method provides for placing the output mouth of the hopper close to the supplying member so as to supply the loose material to the loading station.

### BRIEF DESCRIPTION OF THE DRAWINGS

The present invention will now be described with reference to the attached drawings, which show a non-limiting embodiment thereof, wherein:
- Figure 1 is a perspective view of a pouch containing a loose quantity of material;
- Figure 2 is a front view and with parts removed for clarity of a packaging machine for the production of the pouches of Figure 1 realized in accordance with the present invention;
- Figure 3 is a front view and with parts removed for clarity of a loose material supplying unit of the packaging machine of Figure 2; and
- Figures 4 and 5 are perspective views of respective portions of the supplying unit of Figure 3.

### PREFERRED EMBODIMENTS OF THE INVENTION

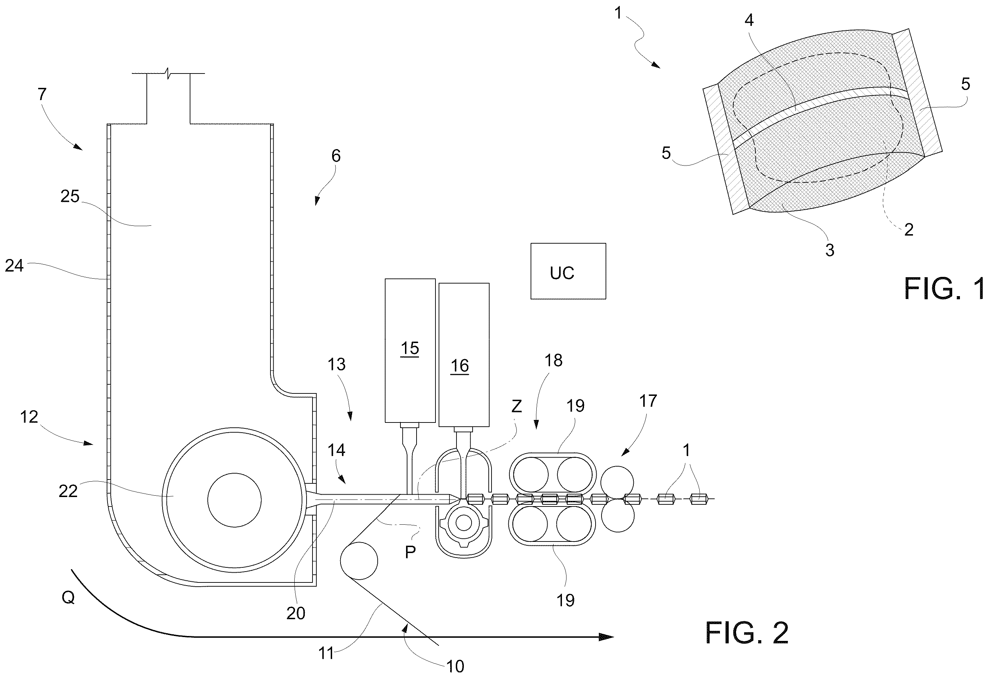

In Figure 1, number 1 denotes as a whole a pouch containing, on the inside, a quantity 2 of a loose material (i.e. a non-compact product, for example in the form of a powder, granules or pasty).

Preferably, the pouch 1 containing the quantity 2 of loose material is a product intended for oral use. Alternatively, the pouch 1 containing the quantity 2 of loose material could be a product for infusion or other uses; in this case the quantity 2 could comprise crushed or powdered tea leaves or herbs.

In accordance with the preferred embodiment, the pouch 1 contains, on the inside, a quantity 2 of snus.

In particular, the quantity 2 of loose material may be a more or less humid material; in case the material of the quantity 2 has a low degree of humidity then the material will be in a powdery/granular and extremely non-compact form; in case the material of the quantity 2 has a higher degree of humidity it will be in a more pasty and more compact form.

Preferably, the quantity 2 of loose material comprises nicotine (e.g. it may comprise tobacco and/or extracted nicotine) and/or other flavours.

The pouch 1 has a substantially quadrilateral shape, preferably square or rectangular.

With particular reference to Figure 1, the pouch 1 has a rectangular shape and has a longitudinal development along a development axis.

The pouch 1 consists of a wrapping sheet 3 which is folded on itself to assume a closed shape around the quantity 2 and is stabilized by sealing. In particular, the pouch 1 is closed by a longitudinal seal 4 (i.e., parallel to the development axis of the pouch 1) and by two transverse seals 5 (i.e., transverse, in particular orthogonal to the development axis of the pouch 1) opposite and preferably parallel to one another. In other words, the wrapping sheet 3 is folded around the quantity 2 and stabilized by sealing.

In Figure 2 number 6 denotes as a whole a packaging machine which produces the pouches 1.

The packaging machine 6 comprises a number of packaging units 7, each of which is configured to produce the pouches 1. Advantageously, each packaging unit 7 operates on a double (or alternatively triple) line to make two (or alternatively three) pouches 1 at a time; in other words, each packaging unit 7 is configured to make two (or alternatively three) rows of pouches 1 simultaneously. Alternatively, each packaging unit 7 operates on a single line (i.e. it makes a single pouch 1 at a time or, better, a single row of pouches 1 at a time).

The packaging unit 7 comprises a conveyor device 10 for conveying a wrapping material band 11 along a supplying path P up to a forming station 13 as better described in the following discussion.

Inside the packaging unit 7, the loose material is instead supplied along a manufacturing path Q which provides for a supplying unit 12 configured to supply the quantities 2 in the area of the wrapping material band 11.

The packaging unit 7 also comprises the forming station 13 located downstream of the supplying unit 12 along the manufacturing path Q for enclosing the quantities 2 within the wrapping material band 11.

In particular, the forming station 13 comprises:
- a wrapping device 14 in the area of which the wrapping material band 11 is rolled up so as to form a tubular wrap having a longitudinal development in which a first edge of the wrapping material band 11 partially overlaps a second edge of the wrapping material band 11 defining an overlapping area;
- a longitudinal sealing unit 15 located downstream or in the area of the wrapping device 14 along the manufacturing path Q and configured to longitudinally seal the tubular wrap in the area of the overlapping area so as to make the longitudinal sealing 4;
- a transverse sealing unit 16 located downstream of the longitudinal sealing unit 15 along the manufacturing path Q and configured to make the transversal seals 5 of the tubular wrap so as to form a continuous succession of pouches 1 connected to one another in the area of the transversal seals 5; and
- a cutting device 17 located downstream of the transverse sealing unit 16 along the manufacturing path Q and configured to transversely cut the tubular wrap in the area of the transversal seals 5 so as to separate the individual pouches 1.

The wrapping device 14, the longitudinal sealing unit 15, the transverse sealing unit 16 and the cutting device 17 are then arranged in succession along the manufacturing path Q.

In accordance with an embodiment variant, the longitudinal sealing unit 15 is arranged to heat-seal the wrapping material band 11 to define the longitudinal seal 4 of the pouches 1. Alternatively, the longitudinal sealing unit 15 could be of the ultrasonic type.

In accordance with an embodiment variant, the transverse sealing unit 16 is arranged to heat-seal the wrapping material band 11 to define the transverse seals 5 of the pouches 1. Alternatively, the transverse sealing unit 16 could be of the ultrasonic or pulsed type.

In accordance with the embodiment shown in Figure 2, a supplying device 18 is interposed between the transverse sealing unit 16 and the cutting device 17. The moving device 18 comprises a pair of belts 19 wound into a loop around respective pulleys and overlapping one another; the pair of belts 19 defines a channel for the passage of the pouches 1. More in detail, the moving device 18 is configured to supply the continuous succession of pouches 1 coming from the transverse sealing unit 16 towards the cutting device 17.

The wrapping device 14 comprises a spindle-like tubular element 20 which extend along the manufacturing path Q (i.e. parallel to the manufacturing path Q). The outer surface of the spindle-like tubular element 20 defines a wrapping surface around which the wrapping material band 11 is folded to form the tubular wrap 8. The spindle-like tubular element 20 defines internally a loose material supplying duct.

Finally, the packaging machine 6 comprises a single control system SC that supervises the operation of all the packaging units 7. More in detail, the control system SC comprises a control unit UC configured to control the packaging units 7.

The control system SC may comprise a first sensor (not shown) for each packaging unit 7 connected to the control unit UC. The first sensor is configured to detect the weight of each pouch 1 and to transmit a signal indicative of the weight of each pouch 1 to the control unit UC. The control unit UC is then configured to drive (control) a respective supplying member 22 based on the signals received from the first sensor. Advantageously, the first sensor is of the microwave type. In accordance with an embodiment variant, the first sensor is located downstream of the cutting device 17 along the manufacturing path Q. Preferably, the first sensor is located upstream of the cutting device 17 along the manufacturing path Q (in particular, it is arranged between the transverse sealing unit 16 and the moving device 18).

The control system SC may comprise a second optical sensor (not shown) for each packaging unit 7 connected to the control unit UC. The second sensor is configured to detect the quality of the pouches 1 (i.e., to detect the presence of powder, or "flaws", i.e., impurities in the seals) and to transmit a signal indicative of the quality of each pouch 1 to the control unit UC. The control unit UC is configured to control the rejection of the non-compliant pouches 1 based on the signals received from the second sensor. Advantageously, the second optical sensor is located downstream of the transverse sealing unit 16 along the manufacturing path Q. In particular, the second optical sensor is interposed between the transverse sealing unit 16 and the moving device 18.

It should be noted that the second sensor can be in addition to or as an alternative to the first sensor.

The control system SC then comprises a third optical sensor (not shown) for each packaging unit 7 connected to the control unit UC. The third sensor is configured to detect the cutting quality of the individual pouches 1 and/or the transverse size of the transverse seals 5 and to transmit an indicative signal to the control unit UC; the control unit UC is configured to control the cutting device 17 based on the signals received from the third sensor and to cause the rejection of the non-compliant pouches 1. Advantageously, the third optical sensor is located downstream of the cutting unit 17 along the manufacturing path Q.

It should be specified that the third sensor can be in addition or as an alternative to the first sensor and/or the second sensor.

The embodiment of the supplying unit 12 is described below.

The loose material supplying circuit 12 is configured to supply in succession the quantities 2 within the tubular wrap along the manufacturing path Q. The supplying unit 12 is then located upstream of the forming station 13 along the manufacturing path Q.

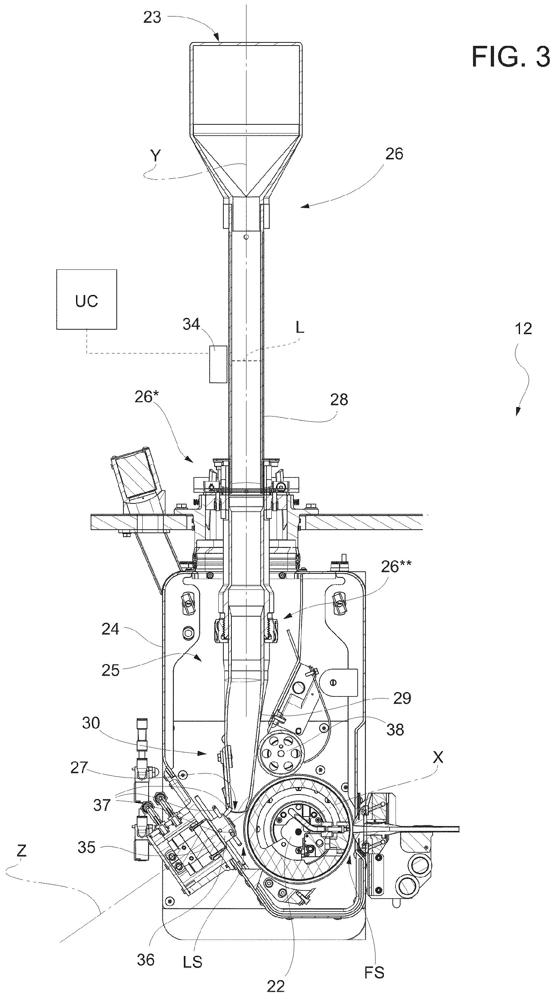

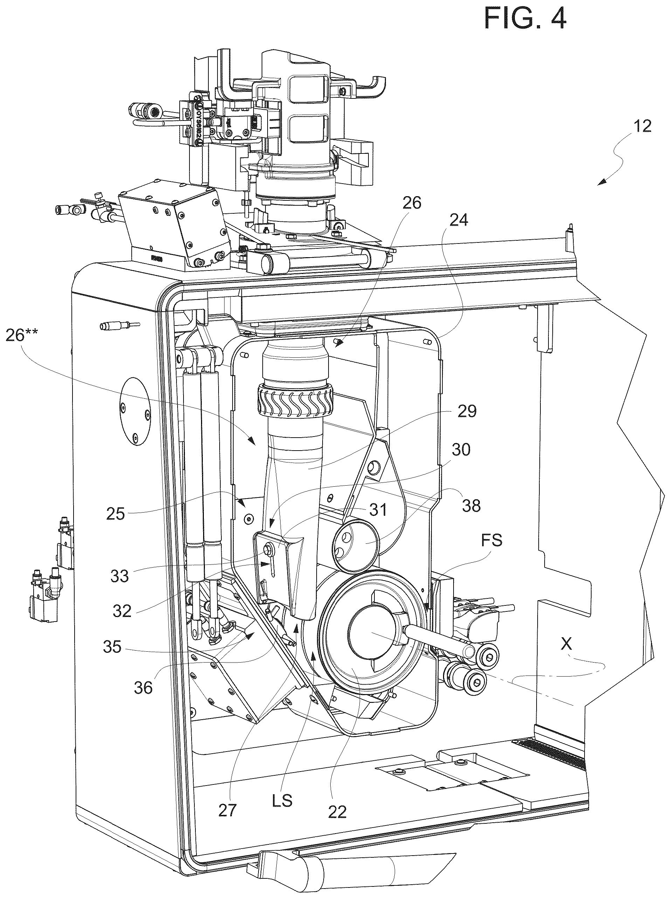

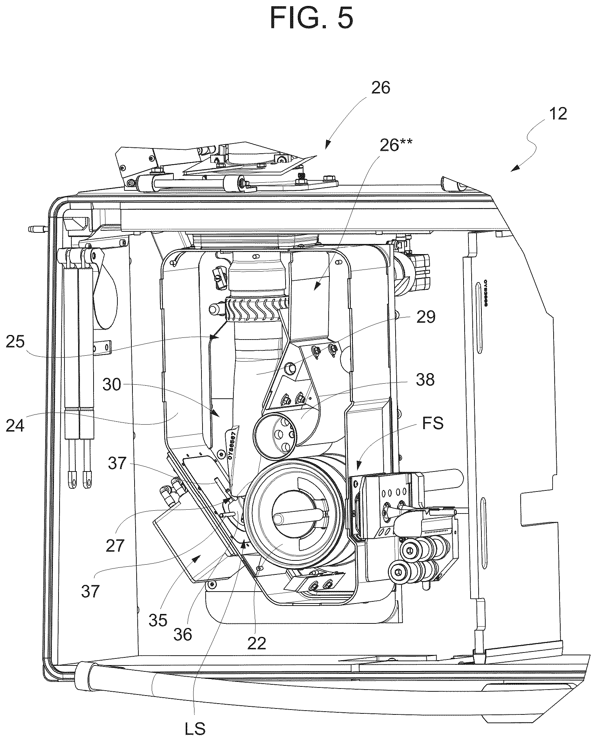

According to what is shown in Figures 3 to 5, the supplying unit 12 comprises the supplying member 22, in particular a supplying drum 22, which preferably rotates with a law of intermittent motion (i.e. having a cyclic alternation of motion phases and stop phases) around an axis X of horizontal rotation. The supplying member 22 is coupled to a suction source in the area of a loading station LS where the supplying member 22 receives the loose material and is coupled to a compressed air source in the area of a supplying station FS where the supplying member 22 (through compressed air jets) directs the individual quantities 2 into the wrapping device 14 defined by the spindle-like tubular element 20.

The supplying unit 12 comprises a frame 24 within which a collection chamber for the loose material 25 is defined (delimited). The supplying member 22 is housed inside the collection chamber 25.

The supplying unit 12 then comprises a hopper 26 which is configured to convey the loose material towards the loading station LS where the loose material is delivered to (or picked up by) the supplying member 22. Inside the hopper 26, the loose material is transported to the loading station LS where it is delivered to (or picked up by) the supplying member 22.

The hopper 26 is arranged above the supplying member 22; in other words, the loose material is delivered to (or picked up by) the supplying member 22 after having travelled a downward path from top to bottom along the hopper 26. Furthermore, the hopper 26 is at least partially housed within the collection chamber 25. The hopper 26 is provided with an input opening 23 so as to supply the loose material. Advantageously, the input opening 23 is in communication with a loose material supplying circuit (not shown). Alternatively, the loose material is manually supplied through the input opening 23.

For example, the loose material supplying circuit may provide for an operator who supplies loose material into the hopper 26 through the input opening 23. Alternatively, the loose material supplying circuit may be automated and provide for the release of loose material into the hopper 26 via ducts.

The hopper 26 is further provided with a lower opening (mouth) 27 for the loose material to come out. The output mouth (opening) 27 is obtained close to the supplying member 22. More in detail, the output opening 27 faces the supplying member 22. In other words, the output opening 27 is obtained so as to allow the exit of the loose material in the area of the loading station LS.

The hopper 26 has a tubular development (with circular or polygonal section) along a longitudinal axis Y and is divided into an upper portion 26* and a lower portion 26**.

The upper portion 26* comprises a side wall 28, for example having a cylindrical development around the axis Y, and is housed partly inside the collection chamber 25 and partly outside the collection chamber 25. The upper portion 26* is provided with the input opening 23 in communication with the loose material supplying circuit.

The lower portion 26** instead is housed entirely inside the collection chamber 25 and comprises a side wall 29 having a tapered shape towards the output opening 27. In other words, the lower portion 26** has a decreasing diameter section starting from the end in connection with the upper portion 26* up to the end in the area of the outlet opening 27.

The hopper 26 is further provided with a device 30 for adjusting the flow of loose material coming out.

The adjustment device 30 is located in the area of the output opening 27 and is configured to adjust the amount of loose material coming out from the hopper 26 through the output opening 27.

Advantageously, the adjustment device 30 can be placed in a first extreme position in which the output opening 27 has a minimum passage section for the loose material or in a second extreme position in which the output opening 27 has a maximum passage section for the loose material or in a number of intermediate positions between the first extreme position and the second extreme position that determine respective intermediate passage sections of the output opening 27 for the loose material.

The size of the passage section is suitably defined based on some parameters. More in detail, said parameters comprise the size of the pouch 1 and the quantity 2 of loose material contained therein and/or the speed of the supplying member 22 and/or the humidity of the loose material (i.e. the fluidity of the loose material).

According to a preferred embodiment, the adjustment device 30 comprises a partition 31 provided with a slot 32 and fixing means 33 which engage the slot 32 and are configured to connect the partition 31 to the side wall 29 in a releasable manner. More in detail, the fixing means 33 are configured to be placed at different heights of the slot 32 so as to determine the width of the passage section for the loose material. In particular, the fixing means 33 are configured to be placed in the area of a first end of the slot 32 to determine the maximum passage section for the loose material or in the area of a second end of the slot 32 to determine the minimum passage section for the loose material or in the area of a number of intermediate points of the slot 32 to determine the number of intermediate passage sections for the loose material.

A column of loose material is always housed inside the hopper 26. More in detail the column of loose material fills the hopper 26 up to at least a threshold level L. Advantageously, the column of loose material is always maintained equal to at least the threshold level L. More in detail, the column of loose material extends from the output opening 27 up to at least the threshold level L. Advantageously, the fact that the column of loose material is always maintained at the threshold level L ensures a constant and progressive release of the loose material to the loading station LS and to the supplying member 22.

The threshold level is indicated with L in Figure 3 and is obtained along the axis Y at a height that allows to have loose material entering the hopper 26 (in particular by means of the loose material supplying circuit) before the column of loose material is emptied. Advantageously, such positioning of the threshold level L ensures a controlled and non-cascading descent of the loose material through the output mouth 27.

For example, the threshold level L is at a height equal to at least 2/3 of the length of the hopper 26 considered starting from the output opening 27. In particular, the threshold level L is obtained along the axis Y at a height that is equal to at least 3/4 of the length of the hopper 26.

The hopper 26 then comprises a (fourth) sensor 34 connected to the control unit UC. The sensor 34 is an integral part of the control system SC. The sensor 34 is a level sensor and is configured to detect the amount of loose material inside the hopper 26; in other words, the sensor 34 is configured to detect the height of the column of loose material inside the hopper 26. In other words, still, the sensor 34 is configured to check that the height of the column of loose material inside the hopper 26 is above the threshold level L. The sensor 34 is further configured to transmit to the control unit UC a signal indicative of the amount of loose material contained inside the hopper 26. The control unit UC is in turn configured to control the supply of the loose material from the loose material supplying circuit into the hopper 26 based on the signal transmitted by the sensor 34. In particular, in case the column of loose material inside the hopper 26 falls below the threshold level L, the loose material is recalled through the supplying circuit to bring the column of loose material inside the hopper 26 back above the threshold level L.

Advantageously, the level sensor 34 is arranged outside the collection chamber 25 in the area of the upper portion 26*.

In any case, this loose material that is supplied through the supplying member will not fall up to the loading station LS but will increase the height of the column of loose material; in this way a constant and gradual supply of the loose material to the loading station LS and to the supplying member 22 is ensured.

Furthermore, the control unit UC is in turn configured to control the supplying drum 22 based on the signal transmitted by the sensor 34 which is indicative of the amount of loose material contained inside the hopper 26.

More in detail, when the hopper 26 no longer receives loose material through the supplying circuit, the column of loose material drops below the threshold level L; in case the column of loose material drops further below a minimum level (preferably different from the threshold level L) the supplying member 22 stops. Preferably, the supplying member 22 is configured to resume rotating only when the column of loose material reaches the threshold level L again.

In accordance with a preferred embodiment, the minimum level is different from the threshold level L. Preferably, said minimum level indicates a lower value of height of the column of loose material than the value indicated by the threshold level L. Preferably, the machine 6 comprises a sensor (not shown in the figures) which is configured to check that the height of the column of loose material inside the hopper 26 is above the minimum level. Said sensor is further configured to transmit to the control unit UC a signal indicative of the amount of loose material contained inside the hopper 26. The control unit UC is in turn configured to control the supplying member 22 based on the signal transmitted by said sensor. In particular, in case the column of loose material inside the hopper 26 falls below the minimum level, the supplying member 22 is stopped. Said sensor, for example, is a laser keypad sensor.

Advantageously, the sensor 34 is a capacitive sensor.

It is evident that the hopper 26 allows the loose material to be released into the collection chamber 25 in a controlled manner; the loose material is deposited near the loading station LS avoiding the formation of large deposits. It is also important to highlight that, through the constant presence of a column of loose material inside the hopper 26, the loose material does not rain precipitate inside the hopper 26 itself and from here into the collection chamber 25; in this way it is therefore possible to avoid the sudden fall of the loose material and, consequently, the possible dispersion and/or escape of the loose material itself from the supplying unit 12.

The supplying unit 12 then comprises a mixing element 35 (or lump breaker) located close to the loading station LS. In particular, the mixing element 35 is housed inside the collection chamber 25. More in detail, the mixing element 35 is arranged below the output opening 27 in the area of the loading station LS in the area where the loose material coming from the output opening 27 accumulates/deposits. The mixing element 35 comprises a central body 36 rotatable around an axis Z, transverse to the axis X, and to which arms 37 are connected which are configured to mix the loose material during rotation around the axis X.

In use, as the supplying member 22 rotates, a continuous roll of loose material is progressively formed on the mantle of the supplying member 22 itself (due to the effect of the suction source); the continuous roll of loose material is conveyed to the supplying station FS where, due to the effect of the compressed air source, the quantities 2 are separated from the continuous roll and transferred along the supplying duct defined by the spindle-like tubular element 20 until entering the wrapping material band 11 which is folded into a tube around the spindle-like tubular element 20.

The supplying unit 12 also comprises a levelling roller 38 configured to adjust the continuous roll of tobacco to a determined and constant thickness. The levelling roller 38 is rotatable about an axis parallel to the axis X and in the opposite direction to the direction of rotation of the supplying drum 22; the levelling roller 38 is located close to the mantle of the supplying drum 22 upstream of the supplying station FS.

The supplying unit 12 is configured to supply the quantities 2 in the supplying duct defined by the spindle-like tubular element 20 in such a way that each quantity 2 is separated from the previous quantity 2 and the next quantity 2 by a corresponding empty space which is necessary so as to make the transverse seal 5 without the transverse seal 5 trapping the loose material or otherwise locally compressing the loose material. In other words, the supplying duct defined by the spindle-like tubular element 20 is filled with quantities 2 interspersed with empty spaces made to allow transverse sealing 5.

The method for the production of the pouches 1 therefore provides for:
- housing a column of loose material inside the hopper 26;
- supplying the loose material through an output mouth 27 of the hopper 26 to a loading station LS of a supplying member 22;
- supplying the quantities 2 that are supplied to the wrapping material band 11; and
- enclosing the quantities 2 within the wrapping material band 11;
- detecting the height of the column of loose material inside the hopper 26, in particular by means of the level sensor 34; and
- controlling the supply of loose material to the hopper 26 based on the height detected by the level sensor 34.

In accordance with an embodiment variant, the output mouth 27 of the hopper is located close to the supplying member 22 so as to supply the loose material to the loading station LS.

Preferably, the method comprises the steps of: providing an adjustment device 30 in the area of the output mouth 27 of the hopper 26 to adjust the amount of loose material coming out; placing the adjustment device 30 in a first extreme position in which the output mouth 27 has a minimum passage section for the loose material or in a second extreme position in which the output mouth 27 has a maximum passage section for the loose material or in a number of intermediate positions between the first extreme position and the second extreme position which determine respective intermediate passage sections of the output mouth 27 for the loose material.

A step in which the loose material in the area of the loading station LS is rain supplied (from above) is explicitly excluded from the method described so far.

### LIST OF REFERENCE NUMBERS OF THE FIGURES

- 1: pouch
- 2: quantity of loose material
- 3: wrapping paper
- 4: longitudinal seal
- 5: transverse seals
- 6: packaging machine
- 7: packaging unit
- 10: conveyor device
- 11: wrapping material band
- 12: supplying unit
- 13: formation station
- 14: wrapping device
- 15: longitudinal sealing unit
- 16: transverse sealing unit
- 17: cutting device
- 18: moving device
- 19: belts
- 20: spindle-like tubular element
- 22: supplying member
- 23: input opening
- 24: frame
- 25: collection chamber
- 26: hopper
- 27: output opening
- 28: side wall
- 29: side wall
- 30: adjustment device
- 31: partition
- 32: slot
- 33: fixing means
- 34: sensor
- 35: mixing element
- 36: central body
- 37: arms
- 38: levelling roller
- P: supplying path
- Q: manufacturing path
- SC: control system
- UC: control unit
- X: axis
- LS: loading station
- FS: supplying station
- Y: axis
- L: threshold level
- Z: axis

## Claims

1. A machine (6) for the production of pouches (1) containing a quantity (2) of a loose material, in particular snus, comprising:
- a forming station (13) located along a manufacturing path (Q) and configured to enclose the quantities (2) within a wrapping material band (11);
- a control unit (UC) configured to control the operation of the machine (6);
- a supplying unit (12) which is located upstream of the forming station (13) along the manufacturing path (Q), is configured to supply the quantities (2) in the area of the wrapping material band (11) and comprises a supplying member (22), in particular a supplying drum (22), which is configured to receive the loose material in the area of a loading station (LS); and a hopper (26) having a tubular development and provided with an output mouth (27) for the loose material located close to the supplying member (22) so as to supply the loose material to the loading station (LS); wherein the hopper (26) is configured to house, on the inside, a column of loose material and comprises a level sensor (34), preferably of the capacitive type, which is configured to detect the height of the column of loose material; and wherein the level sensor (34) is connected to the control unit (UC) to which it transmits a signal indicative of the height of the column of loose material; and wherein the control unit (UC) is configured to control the supply of loose material to the hopper (26) based on the signal transmitted by the level sensor (34);
the machine is **characterized in that:**
the hopper (26) comprises an upper portion (26*) provided with an input opening (23) so as to supply the loose material and a lower portion (26**) and wherein the supplying unit (12) comprises a frame (24) inside which a collection chamber (25) for the loose material is defined and at least the supplying member (22) and the lower portion (26**) of the hopper (26) are housed inside said collection chamber (25).

2. The machine (6) according to claim 1, wherein the level sensor (34) is configured to check that the height of the column of loose material inside the hopper (26) is above a threshold level (L), and wherein the control unit (UC) is configured to cause the supply of loose material to the hopper (26) in case the height of the column of loose material is below the threshold level (L).

3. The machine (6) according to claim 2, wherein the threshold level (L) is obtained at a height such as to cause the supply of loose material to the hopper (26) before the column of loose material is emptied.

4. The machine (6) according to any one of the preceding claims, wherein the lower portion (26**) is defined by a side wall (29) having a tapered shape towards the output mouth (27).

5. The machine (6) according to any one of the preceding claims, wherein the upper portion (26*) is arranged outside the collection chamber (25).

6. The machine according to claim 5, wherein the level sensor (34) is arranged outside the collection chamber (25) in the area of the upper portion (26*).

7. The machine (6) according to any one of the preceding claims, comprising a mixing element (35), in particular of the rotary type, located close to the loading station (LS).

8. The machine (6) according to any one of the preceding claims, wherein the hopper (26) comprises an adjustment device (30) for adjusting the flow of loose material coming out of the hopper (26) through the output mouth (27).

9. The machine (6) according to claim 8, wherein the adjustment device (30) is located in the area of the output mouth (27) so as to adjust the amount of loose material coming out and is configured to be placed in a first extreme position in which the output mouth (27) has a minimum passage section for the loose material or in a second extreme position in which the output mouth (27) has a maximum passage section for the loose material or in a number of intermediate positions between the first extreme position and the second extreme position which determine respective intermediate passage sections of the output mouth (27) for the loose material.

10. The machine (6) according to claim 9, wherein the size of the passage section is defined based on parameters comprising the size of the pouches (1) and/or the quantity (2) of loose material contained therein and/or the speed of the supplying member (22) and/or the humidity of the loose material.

11. The machine (6) according to any one of claims 8 to 10, wherein the adjustment device (30) comprises a partition (31) provided with a slot (32) and fixing means (33) which engage the slot (32) and are configured to connect the partition (31) to a side wall (29) of the hopper (26) in a releasable manner and at different heights so as to vary the passage section for the loose material.

12. A method for the production of pouches (1) containing a quantity (2) of a loose material, in particular snus, comprising the following steps:
- supplying inside a hopper (26) a column of loose material through an input opening (23);
- supplying the loose material through an output mouth (27) of the hopper (26) into a collection chamber (25) for the loose material which houses a supplying member (22) provided with a loading station (LS);
- supplying the quantities (2) of loose material to a wrapping material band (11); and
- enclosing the quantities (2) within the wrapping material band (11);
the method is **characterized in that** it comprises the further steps of
- detecting the height of the column of loose material inside the hopper (26), in particular by means of a level sensor (34); and
- controlling the supply of loose material to the hopper (26) based on the height detected by the level sensor (34).

13. The method according to claim 12 and comprising the further step of stopping the supplying member (22) in case the height of the column of loose material inside the hopper (26) falls below a minimum level.

14. The method according to claim 12 or 13 and comprising the further steps of:
- providing an adjustment device (30) in the area of the output mouth (27) of the hopper (26) so as to adjust the amount of the loose material coming out; and
- placing the adjustment device (30) in a first extreme position, in which the output mouth (27) has a minimum passage section for the loose material, or in a second extreme position, in which the output mouth (27) has a maximum passage section for the loose material, or in a number of intermediate positions between the first extreme position and the second extreme position, which determine respective intermediate passage sections of the output mouth (27) for the loose material.

15. The method according to any one of claims 12 to 14 and comprising the further step of placing the output mouth (27) of the hopper close to the supplying member (22) so as to supply the loose material to the loading station (LS).
